# EUROPEAN PATENT SPECIFICATION

(11) **EP 3 240 184 B1**
(45) Date of publication and mention of the grant of the patent: **12.04.2023**
(21) Application number: 17168388.1
(22) Date of filing: 27.04.2017
(51) Int. Cl.: H02P 9/48

(54) **METHOD FOR IMPLEMENTING A PMG VARAIBLE SPEED CONSTANT FREQUENCY GENERATING SYSTEM AND A CONTROL PROCESSOR**
METHOD FOR IMPLEMENTING A PMG VARAIBLE SPEED CONSTANT FREQUENCY GENERATING SYSTEM AND A CONTROL PROCESSOR
PROCÉDÉ DE MISE EN OEUVRE D'UN SYSTÈME DE GÉNÉRATION À VITESSE VARIABLE ET FRÉQUENCE CONSTANTE ET PROCESSEUR ASSOCIÉ

(30) Priority: 29.04.2016 US 201615142447
(43) Date of publication of application: 01.11.2017
(73) Proprietor: Hamilton Sundstrand Corporation, Charlotte, NC 28217-4578 (US)
(72) Inventor: SAID, Waleed M., Rockford, IL 61114 (US); PATEL, Sunil S., Rockford, IL 61107 (US)
(74) Representative: Dehns

(56) References cited:
- EP-A1- 2 980 977
- EP-A2- 2 448 100
- WO-A1-94/01922
- US-A1- 2009 256 419
- US-B1- 6 534 958

## Description

### BACKGROUND

To produce electric power, aircrafts use generators mounted on the engines located on the wings. Different types of generators have been used that have different levels of complexity and output power characteristics. Previous generators required constant speed inputs for producing power and use mechanisms including constant speed drives and integrated drive generators for driving them. Such devices include heavy mechanical gear boxes that are coupled to an input shaft rotating at varying input speeds and deliver power to an output shaft that rotates at a constant speed, despite the variable input. The heavy gearboxes may add unwanted loads to the aircraft's wings.

In today's environment, variable speed constant frequency (VSCF) systems having generators that can receive a variable input and produce a constant power output are utilized. Known VSCF systems use 3-stage wound synchronous generators including a PMG (permanent magnet generator), an exciter, and a main synchronous output winding on the stator. These multiple stage generators are complex and heavy devices that add a substantial load to the wings of the aircraft. The output power characteristics, weight, and complexity of the generators must be considered in the overall design of the system. WO 94/01922 describes an electrical power generation system. US 6,534,958 B1 describes a system that supplies electrical power and compressed air.

### BRIEF DESCRIPTION

A method for implementing a PMG variable speed constant frequency generating system on an aircraft including an aircraft engine is described in claim 1.

A control processor apparatus implementing a PMG variable speed constant frequency generating system on an aircraft including an aircraft engine is described in claim 8.

In accordance with one or more embodiments a system for implementing a PMG variable speed constant frequency generating system on an aircraft including an aircraft engine is provided is provided. The system includes a control processor and a source coupled to the PMG, wherein the PMG is coupled to the control processor and an AC/DC conversion stage. The system also includes the AC/DC conversion stage coupled to a DC/AC conversion stage, wherein an output signal of the DC/AC conversion stage is controlled by a control signal from the control processor without varying an electrical signal provided to the PMG

### BRIEF DESCRIPTION OF THE DRAWINGS

The subject matter that is regarded as the present invention is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a block diagram of a VSCF (variable speed constant frequency) system having a 3-stage wound rotor synchronous generator;
FIG. 2 illustrates a block diagram for a VSCF system having a 3-stage wound rotor synchronous generator;
FIG. 3 is a block diagram of PMG (permanent magnet generator) variable speed constant frequency generating system;
FIG. 4 illustrates a block diagram for a PMG variable speed constant frequency generating system; and
FIG. 5 illustrates a flow diagram of a PMG variable speed constant frequency generating system.

### DETAILED DESCRIPTION

In one or more embodiments, a permanent magnet generator (PMG) is incorporated in a system to convert a variable input speed into a constant output power. A PMG is a single state generator with an output voltage and frequency that directly corresponds to the input speed. The variable speeds of an input shaft coupled to the PMG generates a variable output voltage and frequency as the input shaft rotates between idle speed and full power. The PMG is lighter and smaller than the conventional wound rotor synchronous generators and therefore has benefits including reduced weight and increased volumetric power densities. In one or more embodiments, the frequency and voltage of the output power are controlled electronically by a control processor.

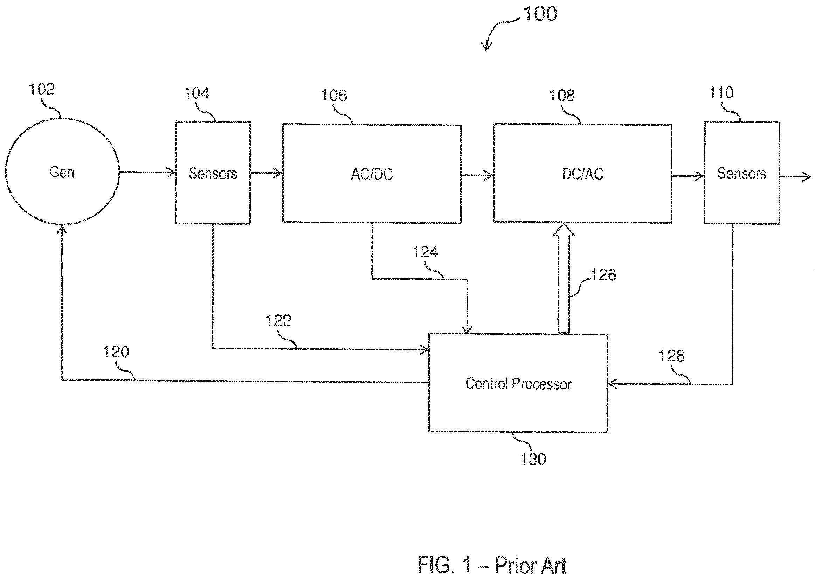

Now referring to prior art FIG. 1, a high level block diagram of a VSCF (variable speed constant drive) system 100 having a wound rotor synchronous generator is provided. The system includes a 3-stage wound rotor synchronous generator 102 (3-stage generator) comprising a PMG, an exciter generator and a main synchronous output generator. The PMG, exciter generator, and main synchronous output generator are not shown in FIG. 1.

The control processor 130 controls the voltage produced by the 3-stage generator 102 by supplying an exciter drive current signal 120 to the exciter generator of the 3-stage generator 102. The control processor 130 is able to detect the DC signal 124 at the output of the AC/DC conversion stage 106. The control processor 130 is able to adaptively modify the exciter driver current 120 based on the detected DC signal 124.

The control processor 130 requires power for operation. The PMG stage of the 3-stage generator 102 supplies power to the control processor enabling the control processor to function.

The voltage that is output from the 3-stage generator 102 is provided to sensors 104 and is further provided to an AC/DC conversion stage 106 for converting the received AC signal to a DC signal. The AC/DC conversion stage 106 receives a 3-phase input from the generator and converts the input into a single DC output.

The control processor 130 is capable of detecting the voltage at the output of the AC/DC conversion stage 106. The control processor 130 is tasked with maintaining a constant voltage at the output of the AC/DC conversion stage 106 which is accomplished by modifying the exciter drive current 120 provided to the 3-stage generator 102. The AC/DC conversion stage 106 removes the frequency component of the voltage of the signal received from the 3-stage generator 102. The output of the AC/DC conversion stage 106 is coupled to a DC/AC conversion stage 108 where the frequency of the output is controlled by the control processor 130. The control processor 130 can be configured to provide a PWM signal 126 to the DC/AC conversion stage 108 to affect the frequency the output.

The power that is output from the DC/AC conversion stage 108 is coupled to sensor 110 that detects the voltage and current of the output signal. Sensors 110 can provide a feedback signal 128 to the control processor 130. The control processor 130 is able to dynamically modify the control signal 126 based on the feedback signal 128.

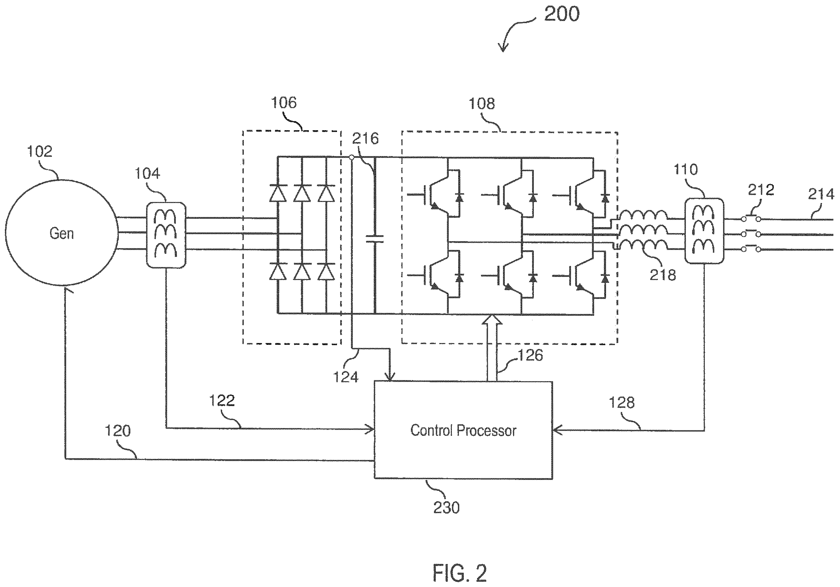

Now referring to FIG. 2, a block diagram of a prior art VSCF (variable speed constant drive) system 200 having a wound rotor synchronous generator is provided. The generator 102 receives an exciter drive current signal 120 from control processor 130. The control processor 130 is configured to control the DC signal at the output of the AC/DC conversion stage 106 by adapting the exciter drive signal 120 supplied to the generator 102 based on the signal detected voltage signal at 124. The signal that is output of the generator 102 is a 3-phase AC signal that is coupled to sensors 104 and is further supplied to the AC/DC conversion stage 106.

The AC/DC conversion stage 106 converts the 3-phase signal into a single DC output. The AC/DC conversion stage 106 is coupled to a DC link capacitor 216 and further coupled to a DC/AC conversion stage 108 where the input DC signal is converted to a 3-phase output signal. The voltage and frequency of the output signal 114 is controlled by a control signal 126 provided by the control processor 130. The control signal 126 can be a PWM signal. The signal that is output of the DC/AC conversion stage 108 passes through filter 218 and sensors 110. Sensors 110 allow the control processor 130 to detect the current, voltage and frequency of the output signal through a feedback signal 128. The control processor 130 is configured to dynamically modify the control signal 126 based on the feedback signal 128. After the signal passes through filters 110, the signal is supplied to the line connections 212.

In FIG. 2, the output of the DC/AC 108 is supplied to an electromagnetic interference (EMI) and power quality (PQ) filter 218 and to a point of regulation (POR) voltage and output current sensors 110. The control processor 130 is configured to read the POR voltage and output current sensors 110 that provide feedback indicating any voltage loss across the filters 218.

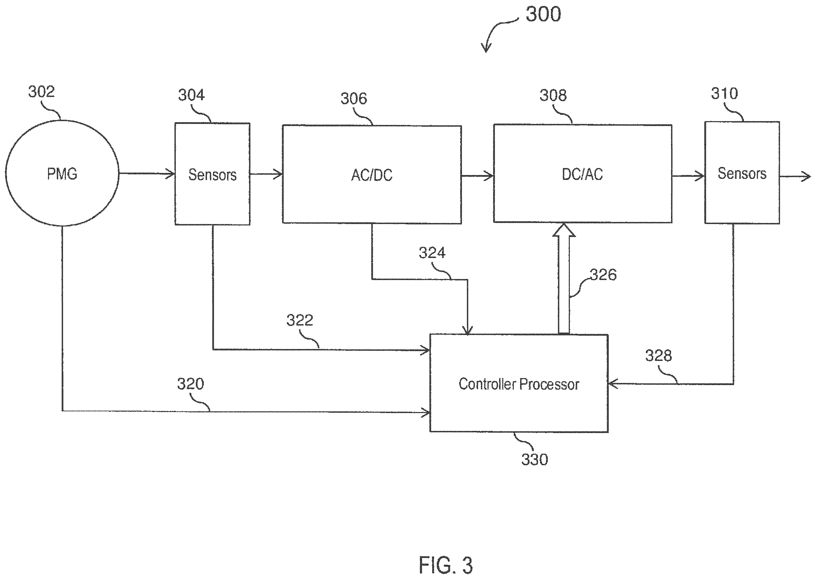

Referring to FIG. 3, a PMG based VSCF system 300 in accordance with one or more embodiments is provided. The PMG 302 is coupled to a variable input. In an embodiment, the PMG 302 can be coupled to an aircraft's engine where the input to the PMG 302 varies according to the engine. The input can vary from idle while the aircraft is grounded to full power when the aircraft is operating at top speeds.

The output of the PMG 302 is coupled to sensors 304 and is further coupled to the AC/DC conversion stage 306. The AC/DC conversion stage 306 converts the received input into a DC signal. In an embodiment, a 3-phase signal supplied by the PMG 302 is converted to a single DC signal that is provided to the AC/DC conversion stage 306. The system 300 includes a control processor 330 that receives power from the PMG 302 during operation through connection 320.

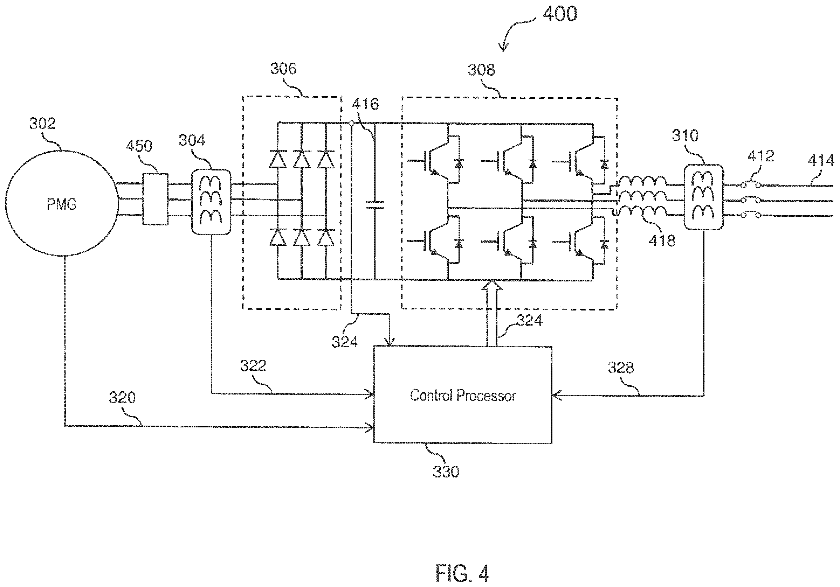

The control processor 330 also detects the output voltage of the AC/DC conversion stage 306 that varies with the source driving the PMG 302. In this configuration, the controller processor 330 is reading the voltage through connection 324. The control processor 330 is not controlling the PMG 302 to control the voltage at the output of the AC/DC conversion stage 306. The prior art uses a control processor to modify an exciter current supplied to the generator to control the output of the generator. The PMG 302 of FIG. 4 does not include an exciter stage and further does not receive an exciter current signal from the control processor for controlling the output of the PMG 302. In an example, the PMG 302 is coupled to an aircraft engine that drives the PMG 302. As a result, the output voltage of the PMG 302 is proportional to rate of the engine speed.

The output of the PMG is supplied to PMG voltage and current sensors 304. The PMG voltage and current sensors 304 are coupled to an AC/DC conversion stage 306 to convert the AC signal to a DC signal. In an embodiment, the input from the PMG is a 3-phase input and is converted to a single DC signal. The control processor 330 is further configured to detect the DC voltage 324 at the output of the AC/DC conversion stage 306.

The AC/DC conversion stage 306 is coupled to a DC/AC conversion stage 308 to convert the DC input into a 3-phase output signal. At the DC/AC conversion stage 308, the control processor 330 is tasked with controlling the output frequency and the output voltage of the output signal. The control processor 330 is configured to read the PMG voltage and current from sensors 310 through feedback signal 328.

The control processor 330 is coupled to the DC/AC conversion stage 308 and is further configured to provide a control signal 328 for controlling the output voltage and output frequency of the output signal. In an embodiment, the control processor 330 supplies a PWM signal to the DC/AC conversion stage 308 to adaptively modify the voltage and frequency of the signal that is output of the DC/AC conversion stage 308 according to feedback signal 328. The duty cycle of the PWM controls the voltage of the output signal. The frequency of the duty cycle controls the frequency of the output signal.

The control processor 330 is configured to read the output voltage, output current and frequency from a point of regulation (POR) voltage and output current sensors 310. The POR voltage and output current sensors 310 provide a feedback signal 328 to the control processor 330 to allow the control processor to effect the change.

Referring now to FIG. 4, a PMG based VSCF system 400 is provided. A PMG 302 is configured to receive a variable speed input to produce power. The output of the PMG 302 is proportional to the speed of rotation of the shaft of the engine. Many applications require power being supplied at a constant voltage and frequency. The PMG 302 also provides power through connection 320 to control processor 330. The power produced by the PMG 302 is supplied to an AC/DC conversion stage 306 through sensors 304. In one or more embodiments, a fault protection mechanism 450 is used to separate the connection between the PMG 302 and current sensors 304. In the event of a short circuit fault at the output of PMG 302, the fault protection mechanism 450 will disconnect the PMG 302 to stop the flow of current to the fault. A non-limiting example of a fault protection mechanism can be a fusible link. The AC/DC conversion stage 306 converts the 3-phase signal to a DC signal. The AC/DC conversion stage 306 is coupled to a DC link capacitor 416 and is further coupled to DC/AC conversion stage 308. The AC/DC conversion stage 308 converts the DC input and coverts the signal into a 3-phase signal. The control processor 330 controls the frequency and voltage of the output of DC/AC conversion stage 308 through control signal 326. In an embodiment, the control signal 326 is a PWM signal. The purpose of the PWM signal is to control the frequency and the voltage of the output signal 414. After the AC/DC conversion stage the voltage is varying with the input driving the PMG 302. The control processor is used to ensure the voltage and the frequency is constant. A PWM signal is used to control the voltage and the frequency at the DC/AC conversion stage 308.

The output of the DC/AC conversion stage 308 is coupled to the line connector 412 through filter 418 and sensors 310. The control processor 330 is configured to detect the voltage and current from the sensors 310. In an embodiment, sensors 310 are point of regulation (POR) sensors that ensure the output voltage is constant by providing a feedback signal 328 to the control processor 330 causing for the control processor to dynamically adapt the control signal 326 provided to the DC/AC conversion stage. In an embodiment, the output power is provided at 115V and 400 Hz.

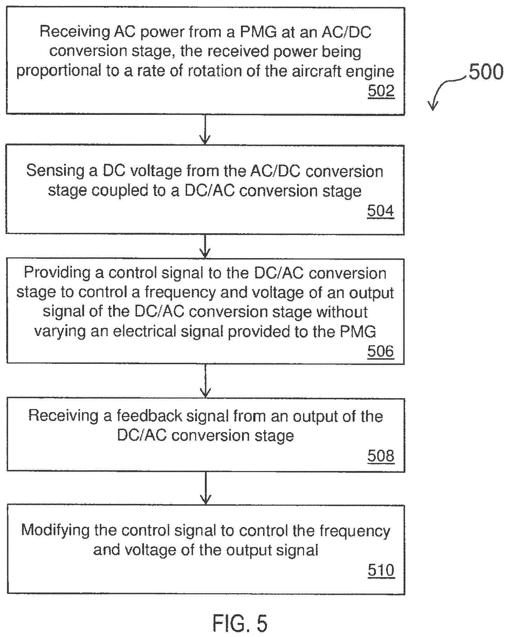

FIG. 5 illustrates a flow diagram 500 for implementing a PMG (permanent magnet generator) variable speed constant frequency generating system. Block 502 provides receiving, via a control processor, power from a PMG, wherein the PMG is coupled to an AC/DC conversion stage. Block 504 includes sensing, via the control processor, a DC signal from the AC/DC conversion stage coupled to a DC/AC conversion stage. Block 506 includes transmitting a control signal to the DC/AC conversion stage to control a frequency and voltage of the output signal of the DC/AC conversions stage without varying an electrical signal provided to the PMG.

Block 508 further provides receiving a feedback signal from an output of the DC/AC conversion stage and block 510 provides modifying the control signal to control the frequency and voltage of the output signal.

The disclosure describes a technique to simplify the complexity of the 3-stage wound rotor synchronous generator implementation. In one or more embodiments, an exciter stage, the smaller PMG, and main wound generator are no longer required reducing the load placed on the wings. Using a PMG and control processor provides the benefits described above.

## Claims

1. A method for implementing a PMG "permanent magnet generator" (302) variable speed constant frequency generating system on an aircraft including an aircraft engine, the method comprising: receiving an AC power (320) from the PMG at an AC/DC conversion stage (306), the
received power being proportional to a rate of rotation of the aircraft engine;
converting the AC power to DC power in the AC/DC conversion stage (306);
receiving a sensed DC voltage output (324) by the AC/DC conversion stage (306);
providing a DC voltage to a DC/AC conversion stage (308); and providing, by a control processor (330), a control signal (326) to the DC/AC conversion stage (308) to control a frequency and a voltage of an output signal (414) of the DC/AC conversion stage (308), and receiving, at the control processor (330), a feedback signal (328) to modify the output signal (414) of the DC/AC conversion stage (308) by adjusting the control signal (326) provided to the DC/AC conversion stage (308), wherein the feedback signal (328) includes voltage and current of the output signal (414) of the DC/AC conversation stage (308); the method **characterized by** comprising:
receiving power from the PMG (302) at the control processor (330) to power the control processor (330); receiving, at the control processor (330), a sensed PMG voltage and current signal (322) of the PMG (302) from a PMG voltage and current sensor (304) coupled to the PMG (302).

2. The method of claim 1, wherein the output signal (414) has a frequency of 400 Hz.

3. The method of any preceding claim, wherein the output signal (414) has a voltage of 115V.

4. The method of any preceding claim, wherein the output signal (414) is a 3-phase output signal (414).

5. The method of any preceding claim, wherein the control signal (326) is a PWM (pulse width modulation) signal for controlling the output signal (414).

6. The method of any preceding claim, wherein the AC/DC conversion stage (308) receives a 3-phase signal and provides a single DC signal to the DC/AC conversion stage (308), wherein the DC/AC conversion stage (308) provides a 3-phase output signal (414).

7. A control processor (330) of a PMG "permanent magnet generator" based variable speed constant frequency generating system on an aircraft including an aircraft engine, the control processor (330) configured to
receive an AC power (320) from the PMG at an AC/DC conversion stage (306), the received power being proportional to a rate of rotation of the aircraft engine;
receive, at the control processor (330), a DC voltage (324) from a sensor coupled to the AC/DC conversion stage (306) that is further coupled to a DC/AC conversion stage (308);
receive an output signal (414) of the DC/AC conversion stage (308); and
provide, by the control processor (330), a control signal (326) to the DC/AC conversion stage (308) to control a frequency and a voltage of the output signal (414) of the DC/AC conversion stage (308) and
receive a feedback signal (328) to modify the output signal (414) of the DC/AC conversion stage (308) by adjusting the control signal (326) provided to the DC/AC conversion stage (308), wherein the feedback signal includes voltage and current of the output signal (414) of the DC/AC conversation stage (308);
the control processor **characterized by** being configured to:
receive, at the control processor (330), power from the PMG (302) to power the control processor (330);
receive, at the control processor (330), a sensed PMG voltage and current signal (322) of the PMG (302) from a PMG voltage and current sensor (304) coupled to the PMG (302).

8. The control processor (330) of claim 7, wherein the output signal (414) has a frequency of 400 Hz.

9. The control processor (330) of claim 7 or 8, wherein the output signal (414) has a voltage of 115V.

10. The control processor (330) of any of claims 7 to 9, wherein the output signal (414) is a 3-phase output signal (414).

11. The control processor (330) of any of claims 7 to 10, wherein the control signal (326) is a PWM "pulse width modulation" signal for controlling the output signal (414).

12. The control processor (330) of any of claims 7 to 11, wherein the AC/DC conversion stage (308) receives a 3-phase signal and provides a single DC signal to the DC/AC conversion stage (308), wherein the DC/AC conversion stage (308) provides a 3-phase output signal (414).

## Patentansprüche

1. Verfahren zum Implementieren eines Erzeugungssystems mit variabler Geschwindigkeit und konstanter Frequenz mit einem PMG, "Permanentmagnetgenerator", (302) an einem Flugzeug, das ein Flugzeugtriebwerk beinhaltet, wobei das Verfahren Folgendes umfasst:
Empfangen einer AC-Leistung (320) von dem PMG in einer AC/DC-Umwandlungsstufe (306), wobei die empfangene Leistung proportional zu einer Rotationsrate des Flugzeugtriebwerks ist;
Umwandeln der AC-Leistung in DC-Leistung in der AC/DC-Umwandlungsstufe (306);
Empfangen eines erfassten DC-Spannungsausgangs (324) durch die AC/DC-Umwandlungsstufe (306);
Bereitstellen einer DC-Spannung an eine DC/AC-Umwandlungsstufe (308); und
Bereitstellen, durch einen Steuerprozessor (330), eines Steuersignals (326) an die DC/AC-Umwandlungsstufe (308), um eine Frequenz und eine Spannung eines Ausgangssignals (414) der DC/AC-Umwandlungsstufe (308) zu steuern, und Empfangen, an dem Steuerprozessor (330), eines Rückkopplungssignals (328), um das Ausgangssignal (414) der DC/AC-Umwandlungsstufe (308) zu modifizieren, indem das der DC/AC-Umwandlungsstufe (308) bereitgestellte Steuersignal (326) eingestellt wird, wobei das Rückkopplungssignal (328) Spannung und Strom des Ausgangssignals (414) der DC/AC-Umwandlungsstufe (308) beinhaltet; wobei das Verfahren **dadurch gekennzeichnet ist, dass** es Folgendes umfasst:
Empfangen von Leistung von dem PMG (302) an dem Steuerprozessor (330), um den Steuerprozessor (330) mit Leistung zu versorgen;
Empfangen, an dem Steuerprozessor (330), eines erfassten PMG-Spannungs- und -Stromsignals (322) des PMG (302) von einem PMG-Spannungs- und -Stromsensor (304), der mit dem PMG (302) gekoppelt ist.

2. Verfahren nach Anspruch 1, wobei das Ausgangssignal (414) eine Frequenz von 400 Hz aufweist.

3. Verfahren nach einem der vorhergehenden Ansprüche, wobei das Ausgangssignal (414) eine Spannung von 115 V aufweist.

4. Verfahren nach einem der vorhergehenden Ansprüche, wobei das Ausgangssignal (414) ein 3-Phasen-Ausgangssignal (414) ist.

5. Verfahren nach einem der vorhergehenden Ansprüche, wobei das Steuersignal (326) ein PWM-(pulse width modulation - Pulsbreitenmodulations-)Signal zum Steuern des Ausgangssignals (414) ist.

6. Verfahren nach einem der vorhergehenden Ansprüche, wobei die AC/DC-Umwandlungsstufe (308) ein 3-Phasen-Signal empfängt und der DC/AC-Umwandlungsstufe (308) ein einzelnes DC-Signal bereitstellt, wobei die DC/AC-Umwandlungsstufe (308) ein 3-Phasen-Ausgangssignal (414) bereitstellt.

7. Steuerprozessor (330) eines auf einem PMG, "Permanentmagnetgenerator", basierten Erzeugungssystems mit variabler Geschwindigkeit und konstanter Frequenz an einem Flugzeug, das ein Flugzeugtriebwerk beinhaltet, wobei der Steuerprozessor (330) dazu konfiguriert ist, eine AC-Leistung (320) von dem PMG in einer AC/DC-Umwandlungsstufe (306) zu empfangen, wobei die empfangene Leistung proportional zu einer Rotationsrate des Flugzeugtriebwerks ist;
Empfangen, an dem Steuerprozessor (330), einer DC-Spannung (324) von einem Sensor, der mit der AC/DC-Umwandlungsstufe (306) gekoppelt ist, die ferner mit einer DC/AC-Umwandlungsstufe (308) gekoppelt ist;
Empfangen eines Ausgangssignals (414) der DC/AC-Umwandlungsstufe (308); und
Bereitstellen, durch den Steuerprozessor (330), eines Steuersignals (326) an die DC/AC-Umwandlungsstufe (308), um eine Frequenz und eine Spannung des Ausgangssignals (414) der DC/AC-Umwandlungsstufe (308) zu steuern, und
Empfangen eines Rückkopplungssignals (328), um das Ausgangssignal (414) der DC/AC-Umwandlungsstufe (308) zu modifizieren, indem das der DC/AC-Umwandlungsstufe (308) bereitgestellte Steuersignal (326) eingestellt wird, wobei das Rückkopplungssignal Spannung und Strom des Ausgangssignals (414) der DC/AC-Umwandlungsstufe (308) beinhaltet;
wobei der Steuerprozessor **dadurch gekennzeichnet ist, dass** er zu Folgendem konfiguriert ist:
Empfangen, an dem Steuerprozessor (330), von Leistung von dem PMG (302), um den Steuerprozessor (330) mit Leistung zu versorgen;
Empfangen, an dem Steuerprozessor (330), eines erfassten PMG-Spannungs- und -Stromsignals (322) des PMG (302) von einem PMG-Spannungs- und -Stromsensor (304), der mit dem PMG (302) gekoppelt ist.

8. Steuerprozessor (330) nach Anspruch 7, wobei das Ausgangssignal (414) eine Frequenz von 400 Hz aufweist.

9. Steuerprozessor (330) nach Anspruch 7 oder 8, wobei das Ausgangssignal (414) eine Spannung von 115 V aufweist.

10. Steuerprozessor (330) nach einem der Ansprüche 7 bis 9, wobei das Ausgangssignal (414) ein 3-Phasen-Ausgangssignal (414) ist.

11. Steuerprozessor (330) nach einem der Ansprüche 7 bis 10, wobei das Steuersignal (326) ein PWM-"Pulsbreitenmodulations"-Signal zum Steuern des Ausgangssignals (414) ist.

12. Steuerprozessor (330) nach einem der Ansprüche 7 bis 11, wobei die AC/DC-Umwandlungsstufe (308) ein 3-Phasen-Signal empfängt und der DC/AC-Umwandlungsstufe (308) ein einzelnes DC-Signal bereitstellt, wobei die DC/AC-Umwandlungsstufe (308) ein 3-Phasen-Ausgangssignal (414) bereitstellt.

## Revendications

1. Procédé de mise en œuvre d'un système de génération à vitesse variable et fréquence constante à PMG « générateur à aimant permanent » (302) sur un aéronef comportant un moteur d'aéronef, le procédé comprenant :
la réception d'une puissance CA (320) du PMG à un étage de conversion CA/CC (306), la puissance reçue étant proportionnelle à une vitesse de rotation du moteur d'aéronef ;
la conversion de la puissance CA en puissance CC dans l'étage de conversion CA/CC (306) ;
la réception d'une sortie de tension CC détectée (324) par l'étage de conversion CA/CC (306) ;
la fourniture d'une tension CC à un étage de conversion CC/CA (308) ; et
la fourniture, par un processeur de commande (330), d'un signal de commande (326) à l'étage de conversion CC/CA (308) pour commander une fréquence et une tension d'un signal de sortie (414) de l'étage de conversion CC/CA (308), et la réception, au niveau du processeur de commande (330), d'un signal de rétroaction (328) pour modifier le signal de sortie (414) de l'étage de conversion CC/CA (308) en ajustant le signal de commande (326) fourni à l'étage de conversion CC/CA (308), dans lequel le signal de rétroaction (328) comporte la tension et le courant du signal de sortie (414) de l'étage de conversation CC/CA (308) ; le procédé étant **caractérisé en ce qu'**il comprend :
la réception d'énergie du PMG (302) au niveau du processeur de commande (330) pour alimenter le processeur de commande (330) ;
la réception, au niveau du processeur de commande (330), d'un signal de tension et de courant PMG détecté (322) du PMG (302) provenant d'un capteur de tension et de courant PMG (304) couplé au PMG (302).

2. Procédé selon la revendication 1, dans lequel le signal de sortie (414) a une fréquence de 400 Hz.

3. Procédé selon une quelconque revendication précédente, dans lequel le signal de sortie (414) a une tension de 115 V.

4. Procédé selon une quelconque revendication précédente, dans lequel le signal de sortie (414) est un signal de sortie triphasé (414) .

5. Procédé selon une quelconque revendication précédente, dans lequel le signal de commande (326) est un signal PWM (modulation de largeur d'impulsion) pour commander le signal de sortie (414) .

6. Procédé selon une quelconque revendication précédente, dans lequel l'étage de conversion CA/CC (308) reçoit un signal triphasé et fournit un seul signal CC à l'étage de conversion CC/CA (308), dans lequel l'étage de conversion CC/CA (308) fournit un signal de sortie triphasé (414).

7. Processeur de commande (330) d'un système de génération à vitesse variable et fréquence constante à PMG « générateur à aimant permanent » sur un aéronef comportant un moteur d'aéronef, le processeur de commande (330) étant configuré pour recevoir une puissance CA (320) du PMG à un étage de conversion CA/CC (306), la puissance reçue étant proportionnelle à une vitesse de rotation du moteur de l'aéronef ;
recevoir, au niveau du processeur de commande (330), une tension CC (324) d'un capteur couplé à l'étage de conversion CA/CC (306) qui est en outre couplé à un étage de conversion CC/CA (308) ; recevoir un signal de sortie (414) de l'étage de conversion CC/CA (308) ; et
fournir, par le processeur de commande (330), un signal de commande (326) à l'étage de conversion CC/CA (308) pour commander une fréquence et une tension du signal de sortie (414) de l'étage de conversion CC/CA (308) et
recevoir un signal de rétroaction (328) pour modifier le signal de sortie (414) de l'étage de conversion CC/CA (308) en ajustant le signal de commande (326) fourni à l'étage de conversion CC/CA (308), dans lequel le signal de rétroaction comporte la tension et le courant du signal de sortie (414) de l'étage de conversation CC/CA (308) ;
le processeur de commande étant **caractérisé en ce qu'**il est configuré pour :
recevoir, au niveau du processeur de commande (330), de l'énergie provenant du PMG (302) pour alimenter le processeur de commande (330) ;
recevoir, au niveau du processeur de commande (330), un signal de tension et de courant PMG détecté (322) du PMG (302) provenant d'un capteur de tension et de courant PMG (304) couplé au PMG (302) .

8. Processeur de commande (330) selon la revendication 7, dans lequel le signal de sortie (414) a une fréquence de 400 Hz.

9. Processeur de commande (330) selon la revendication 7 ou 8, dans lequel le signal de sortie (414) a une tension de 115 V.

10. Processeur de commande (330) selon l'une quelconque des revendications 7 à 9, dans lequel le signal de sortie (414) est un signal de sortie triphasé (414).

11. Processeur de commande (330) selon l'une quelconque des revendications 7 à 10, dans lequel le signal de commande (326) est un signal PWM de « modulation de largeur d'impulsion » pour commander le signal de sortie (414).

12. Processeur de commande (330) selon l'une quelconque des revendications 7 à 11, dans lequel l'étage de conversion CA/CC (308) reçoit un signal triphasé et fournit un seul signal CC à l'étage de conversion CC/CA (308), dans lequel l'étage de conversion CC/CA (308) fournit un signal de sortie triphasé (414) .
